# EUROPEAN PATENT APPLICATION

(11) **EP 4 357 672 A1**
(43) Date of publication of application: **24.04.2024**
(21) Application number: 22825425.6
(22) Date of filing: 15.06.2022
(51) Int. Cl.: F23G 5/027, B09B 3/29, C08J 11/16, B29B 17/00

(54) **PROCESS FOR RECYCLING WASTE CONSISTING OF POLYMERIC, COMPOSITE AND INDUSTRIAL RUBBER MATERIALS**

(30) Priority: 18.06.2021 RU 2021117748
(71) Applicant: Obshchestvo s Ogranichennoy Otvetstvennost'Yu "Chistaya Energiya", Moscow, 121205 (RU)
(72) Inventor: POTYOMKIN, Maksim Aleksandrovich, Lipeck, 398006 (RU)
(74) Representative: Chimini, Francesco
(86) International application number: PCT/RU2022/050188
(87) International publication number: WO 2022/265538

(57) **Abstract**

This invention relates to methods for recycling production and consumption waste of polymeric, polymer compound and industrial-rubber materials such as wastes of plastic containers, tableware, packaging, construction and finishing materials, worn automobile tyres, glass-fibre-reinforced plastics, and other similar materials in various combinations for the purpose of obtaining new products having consumer-grade qualities. Under this method, a bath of liquid-metal heat-transfer agent is formed by melting, which consists of one or more metals from the group of lead, bismuth, zinc, aluminium, and copper, and the heat-transfer agent is overheated by 50-150°C above the melting temperature. A separating layer is created on the surface of the heat-transfer agent melt by melting a complex of salts of alkali and alkaline earth metals on the melt surface. A refining layer is created above the separating layer by melting active additives consisting of alkali and/or alkaline earth metals. The following conditions are observed: The melting temperature of the molten liquid-metal heat-transfer agent is higher than the melting temperature of molten salts of the separating layer, which, in turn, is higher than the melting temperature of the refining layer melt, and the density of the molten liquid-metal heat-transfer agent is higher than the density of the molten salts of the separating layer, which, in turn, is higher than the density of the refining layer melt. A weighed sample composed of waste that was previously placed in a container with perforated walls with at least one horizontal partition is fed and pushed through the liquid-metal heat-transfer agent bath. At the end of pyrolysis, the containers are taken out of the melt. Concentration of active additives is kept constant by introducing portions of the active additive together with other portions of pyrolyzed waste. The use of the claimed invention allows increasing the degree of desulphurization and dichlorination of pyrolysis products in the form of solid carbon-containing residue and, in the first instance, gaseous products up to the level enabling their application as independent commercial products without additional refining and reducing consumption of expensive alkali and alkaline earth metals. 2 independent claims, 1 illustrations.

## Description

### Field of invention

This invention relates to methods for recycling production and consumption waste of polymeric, polymer compound and industrial-rubber materials such as wastes of plastic containers, tableware, packaging, construction and finishing materials, worn automobile tyres, glass-fibre-reinforced plastics, and other similar materials in various combinations for the purpose of obtaining new products having consumer-grade qualities.

### Background of the invention

A variety of technologies and devices for recycling and disposal of the above-mentioned types of waste are currently known. The most common method used is combustion as fuel, either individually or in combination with other organic wastes, for example, with wood waste, in the form of fuel pellets or briquettes; less common is grinding and reuse as a filler for various road construction materials and pavements. However, the above methods are primitive and do not provide for high added value, as well as ecological safety of disposal. The most advanced and promising method of polymeric waste recycling is pyrolysis, which, depending on the composition breakdown of the feed stock and design features of the equipment used, produces a wide variety of new commercial products, such as a solid carbon-containing residue (pyrolytic carbon), pyrolysis liquid, which is a wide range of liquid hydrocarbon fractions (synthetic crude oil), and pyrolysis gas, which is a mixture of gaseous hydrocarbon compounds, carbon monoxide, and hydrogen. If the waste to be recycled includes, for example, automobile tyres or glass-fibre-reinforced plastics, the pyrolysis process will generate waste in the form of metal cord and glass fibre, which will be subjected to further processing and recycling.

There are currently known different technologies and devices for pyrolysis known: in gaseous medium and in various organic liquids. However, the most promising and effective method is pyrolysis performed in devices with molten salts or non-ferrous metals or their alloys used as a heat-transfer agent. This kind of process provides for the maximum rate of heat transfer from the melt to the material to be subjected to pyrolysis, which significantly reduces the duration and increases the completeness of the substance thermal decomposition reaction.

An example of a liquid-metal pyrolysis technology is a polymeric waste recycling technology proposed in application WO 2016187144 A1 (PRESSWOOD JR RONALD G; BISHOP IAN C +) dated 24/11/2016, where molten aluminum is used as a heat-transfer agent.

There is also a common device [Russian patent for utility model No. 90779, IPC C01B 31/02, Installation for production of pyrolytic carbon, published on 20/1/2010, Bulletin No. 2], where molten lead, bismuth or their alloys are proposed to be used as a heat-transfer agent.

In another common device [Russian patent No. 2 693 800, F23G 5/027; C10B 53/07, Apparatus for processing waste of industrial-rubber and polymeric materials, published on 4/7/2019, Bulletin N_{º} 19], the use of liquid metal heat-transfer agent in the form of molten lead or lead-bismuth alloy is proposed as a technical solution.

A similar solution is contained in a known method [RU No. 2672295, B29B 17/00; C08J 11/04; F23G 7/12, Method for Recycling Waste of Industrial-Rubber and Polymeric Materials published on 13/11/2018, Bulletin No. 32] where a lead-containing melt is also proposed as a heat-transfer agent.

Article by M. Stelmachowski & K. S 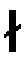 owiński "Conversion of waste rubber as an alternative route to renewable fuel production", WIT Transactions on Ecology and the Environment Volume 121, Published 2009. Website https://www.witpress.com/elibrary/wit-transactions-on-ecology-and-the-environment/121/20268 describes an installation and similar method of pyrolysis of polymer and rubber waste in a heat-transfer agent, which is a eutectic alloy containing 59 to 61 % of tin and 38 to 40% of lead, as well as 1 % of unspecified impurities. Another prior analog is a method of pyrolysis in a liquid metal bath consisting of a molten tin, bismuth or their alloy described in US Patent WO2013094879A1 https://patents.google.com/patent/WO2013094879A1/en

A closer prior analog to the proposed method is a technical solution contained in patent US 2015/0184079 A1, Int. Cl. C10B 53/07; C10L 1/08;C10B 49/14; C10B 27/06; "PROCESS AND SYSTEM FOR WHOLE TYRES AND PLASTC COMPOSITES PYROLYSIS TO FUEL CONVERSION AND COMPOUND RECOVERY", Foreign Application Priority Data Aug. 30, 2012, which offers the widest variety of possible options for heat-transfer media in the form of molten salts in various combinations, such as lithium chloride, potassium chloride, potassium hydroxide, sodium hydroxide, etc. (The system of claim 1 characterized in that said pyrolysis liquid is a molten salt such as LiCl, KCl, KOH, NaOH, cyanides, nitrates, nitrites or combinations thereof), or as a molten non-ferrous metal, and of at least one selected from the group of "zinc, tin, lead, aluminum, copper, or alloys thereof" (The system of claim 1 characterized in that said pyrolysis liquid is a molten non-ferrous metal and selected from at least one of zinc, tin, lead, aluminum, copper or alloys thereof).

A solution closest in the meaning, which can be regarded as a prototype, is described in patent AU 2005227358 A1 dated 20/7/2006 "Continuous thermolytic recycling of plastic and rubber wastes", where a continuous processing in a bath with metal melt containing molten tin, lead or zinc, or in a bath with a melt consisting of salts, oxides or hydroxides of alkali metals, or in a bath containing salts of alkali and/or alkaline-earth metals is proposed. This solution also proposes to introduce desulphurization agents, such as magnesium, into the bath.

The common disadvantage of all above mentioned technical solutions, however, is the fact that molten metals and salts are mainly considered as passive heat-transfer agents. Their objective is only to transfer the heat as efficiently as possible from heating devices to the substance to be pyrolyzed. If this substance is polymer waste, in particular industrial-rubber waste, specifically used automobile tyres, then gaseous, liquid and, to the greatest extent, solid products generated after pyrolysis contain higher levels of sulphur, which, in turn, drastically reduces the consumer properties of the pyrolysis products. The presence of sulphur is because sulphur is purposefully added to rubber as a vulcanizing agent to produce rubber. As a result, the release of pure fractions of hydrocarbons with marketable value from pyrolysis liquid obtained during pyrolysis gas/vapor condensation dipentene, which, due to contamination with sulphur compounds, acquires a repulsive odor and cannot be sold as a separate product without additional and very expensive refining process, becomes considerably complicated. Thus, the task of giving the heat-transfer agent an additional effect in the sense of refining from sulphur and chlorine is relevant. The melts of mixtures of salts, oxides, or hydroxides of alkali and/or alkaline earth metals proposed in the prototype as a heat-transfer agent, as a rule, have excessively high melting temperature for the pyrolysis process based on immersion of material under the melt sheet that will lead to explosive reaction behavior and boiling up of pyrolysis bath due to stormy gassing of low-boiling fractions.

Metal melts proposed in the prototype as heat-transfer media that contain tin, lead and zinc in various ratios have more favorable melting temperature range but are not chemically active enough to deeply bind sulphur and chlorine.

Addition of magnesium to the liquid metal bath proposed in the prior analog contributes to a certain extent to the increase in the degree of desulphurization and dichlorination of pyrolysis products, but this relates to a greater extent to solid pyrolysis products that are in the melt bath for a long time sufficient for the flow of binding reactions of sulphur and partly chlorine. The gaseous reaction products, which are the most commercially valuable, are removed from the liquid metal bath in the form of actively released gas bubbles or even continuous gas jets during a very short time, which is insufficient for any effective purification from sulphur and chlorine.

As it is known from chemistry, the main factors limiting chemical interaction, other things being equal, are concentration of reacting substances and their contact area.

In the known technical prototype solution, magnesium as a desulphurization agent can be added to the liquid metal bath only in a sufficiently limited concentration. Otherwise, the formation of excessive amounts of hard-melting intermetallic compounds will inevitably grow in the liquid metal bath. These compounds will raise the melting temperature of the melt, which, in turn, will require an increase in bath temperature to maintain the fluidity of the melt. The result of the temperature rise will be again the explosive pyrolysis reaction behavior and bath boiling up, which is unacceptable for safety reasons. The addition of magnesium to the molten salts will lead to the formation of a coarse emulsion consisting of spherical macroscopic magnesium particles which, depending on the density ratio, can settle to the bottom of the bath or float to the surface, which will drastically reduce or completely stop the interaction of magnesium with solid pyrolysis residue. It should also be considered that the melt mass shall be considerably, by an order of magnitude, greater than the mass of the material to be decomposed, especially for the molten salts that have much lower density and heat capacity compared with the metal melts, to maintain the process temperature stability and not to allow the bath freezing. Hence, to create even a relatively low percentage concentration of the refining agent in the whole bath volume, its mass flow rate will be considerable, which drastically worsens the process economy. Thus, in the normal course of the process, creating a high concentration of a desulphurization agent is not technically feasible and economically justified. For the same reasons, it is not technically feasible to use metals or alloys that have low specific density, for example, pure aluminum, because the bath with melt mass sufficient for stable pyrolysis processes must have an excessive volume.

The release of pyrolysis gas and/or vapor from the substance immersed under the melt sheet in the form of bubbles or solid jets will limit their contact area with the active additive merely to the outer surface of the bubble and jet, which is obviously not enough for pyrolysis gaseous product deep purification reactions. In addition, it should be considered that it is technically difficult to create a high concentration of an additive in contact with the released pyrolysis gases for the reasons described in the preceding paragraph.

### Summary of the invention

The task to be solved by the claimed group of technical solutions is to increase the degree of the pyrolysis product desulphurization and dichlorination as solid carbon-containing residue, and primarily gaseous products, to a level enabling their application as independent commercial products without additional refining.

The technical result of the claimed group of the invention is an increase in the degree of desulphurization and dichlorination of pyrolysis products in the form of the solid carbon-containing residue and primarily gaseous products up to a level that makes it possible to use them as independent commercial products without additional refining. Reduction in consumption of expensive alkali and alkaline earth metals.

The technical result of the claimed group of inventions is achieved because the method of recycling waste products of polymeric, composite, and industrial-rubber materials forms a liquid-metal heat-transfer bath by means of melting, which consists of one or more metals from the group of lead, bismuth, zinc, aluminum, and copper. The heat-transfer agent is overheated by 50-150°C above the melting temperature, a separating layer is created on the surface of the heat-transfer agent melt by melting a complex of salts of alkali and alkaline-earth metals on the melt surface, a refining layer is created above the separating layer by melting active additives consisting of alkali and/or alkaline earth metals, with the following conditions met: the melting temperature of the molten liquid-metal heat-transfer agent is higher than the melting temperature of the molten salts of the separating layer, which, in turn, is higher than the melting temperature of the refining layer. The density of the melt of the liquid-metal heat-transfer agent is higher than that of the melt of the separating layer, which, in turn, is greater than the density of the refining layer melt. A weighed sample composed of waste that was previously placed in a container with perforated walls with at least one horizontal partition is then fed and pushed through the liquid-metal heat-transfer agent bath. At the end of pyrolysis, the containers are taken out of the melt, and concentration of active additives is kept constant by introducing portions of the active additive together with other portions of pyrolyzed waste.

In the case of the implementation of the claimed technical solution, a separating layer is created by melting of salt complex in the quantitative ratio of 0.1 to 5% of the mass of the liquid-metal heat-transfer agent on the surface of the molten heat-transfer agent.

In the case of the implementation of the claimed technical solution, a refining layer is created by melting of active additives in the quantitative ratio of 0.1 to 5% of the mass of the liquid-metal heat-transfer agent.

In the case of the implementation of the claimed technical solution, one or more metals from the group of lithium, sodium, potassium, magnesium, or calcium are introduced into the melt of the liquid-metal heat-transfer agent as active additives.

In a particular case of implementation of the claimed technical solution, production and consumption waste of polymer, composite and industrial-rubber materials are used as waste.

The technical result of the claimed group of inventions is also achieved due to the fact that the apparatus for treating waste of polymer, composite and industrial-rubber materials includes internal space formed by a bottom plate, side walls and arch, inlet and outlet shutters made in the side walls of the apparatus, with the internal space having a reaction chamber isolated by vertical partitions, which are constructed from the arch and lowered below the level of the heat-transfer agent melt, and equipped with a branch pipe for pyrolysis gas output to the capture and condensation system. The apparatus is fitted with rail guides adapted to move at least one container along these rails, positioned from the inlet shutter to the outlet shutter and running below the level of the heat-transfer agent melt. At least one container has perforated walls and at least one horizontal partition, with the guides from the inlet shutter to the reaction chamber being made top-down at an angle to the horizon with the lowest point of the container movement pattern at the inlet of the reaction chamber. The guides from the reaction chamber to the outlet shutter are designed in an upward direction.

In the particular case of the implementation of the claimed technical solution, it additionally contains a mechanism for pushing the containers along the rail guides.

In the particular case of the implementation of the claimed technical solution, the outlet shutter is equipped with a gravity slide and a hopper for unloading solid carbon-containing pyrolysis residue.

In the particular case of the implementation of the claimed technical solution, the installation angle for the guides is 3-10 degrees.

### Brief description of the drawings

Details, features, as well as advantages of the present invention follow from the below description of implementations of the claimed technical solution with the use of the drawings which show:

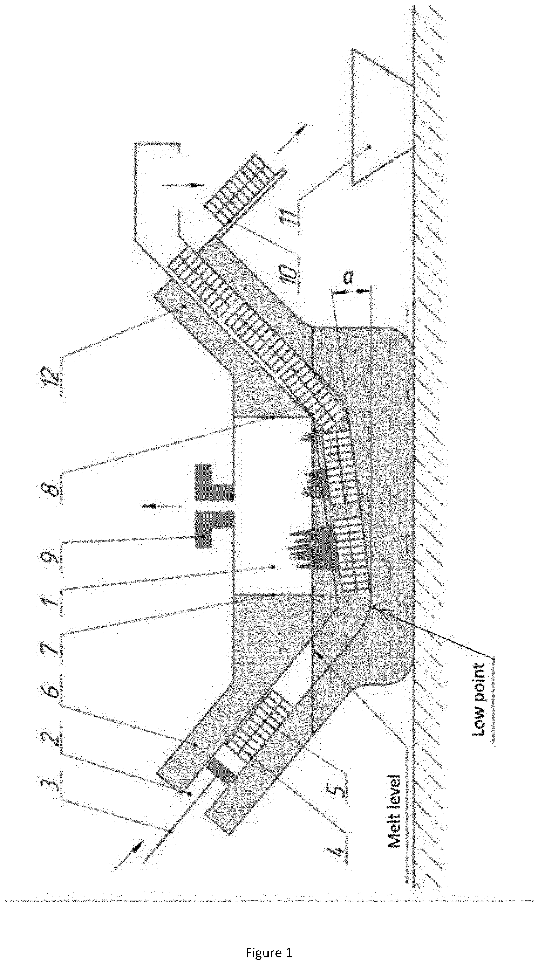

Fig. 1 - installation diagram.

In the figures, the numbers denote the following positions:
*1 - reaction chamber, 2* - *rail guides, 3* - *pushing mechanism, 4* - *container, 5* - *container horizontal partition, 6* - *inlet shutter, 7*; *8* - *partitions separating the reaction chamber, 9 - branch pipe for pyrolysis gas outlet into capture and condensation system, 10* - *gravity slide for used containers, 11* - *hopper for solid residue, 12 - outlet shutter, LP* - *lower point of rail guide trajectory, α* - *elevation angle of rail trajectory after passing the lower point.*

### Implementation of the invention

A technical solution is provided for simultaneous separative refining of pyrolysis products, which consists in creating a three-layer pyrolysis bath, in which the main lower layer is the melt of the heat-transfer alloy elements, the second intermediate separating layer is molten salts, which separates the heat-transfer agent from the third upper layer of the melt composed of a complex of refining agents. The bath is formed by melting a liquid-metal heat-transfer agent consisting of one or more metals from the group of lead, bismuth, zinc, aluminum, copper or an alloy thereof, followed by the melting of a salt complex on the surface of the molten heat-transfer agent, and the formation of a third layer by melting active additives in the form of a refining complex consisting of alkali and/or alkaline earth metals completes the bath formation.

Addition of a refining agent complex to the liquid metal bath is selected to prevent the formation of significant amounts of hard-melting intermetallic compounds that lead to an increase in the melting temperature of the molten active additives.

The pyrolysis process of polymer substances in the liquid metal bath is accompanied by intense bath bubbling due to released gases and vapors. As a result, despite the presence of the separating layer of molten salts, the elements are partially redistributed between the main bath and the refining layer, which leads to a partial transfer of refining additives into the bath and vice versa, partial transfer of bath metals into the refining additive layer. However, the separating layer of molten salts in all conditions of practical proving of the method allowed to maintain the minimum concentration of active additives in total mass of the bath at a minimum level of not more than 3-5% and the maximum concentration in the upper refining layer at a level of not less than 95-97%.

In quantitative terms, the fraction of the active additive is within the range of 0.1-5% of the pyrolysis bath melt mass. This range was experimentally established. Experiments also demonstrated that an additive of less than 0.1% had no refining effect, and the increase in the additive concentration above 5% resulted in the additive cost exceeding the economic effect from the pyrolysis product refinement. The optimal quantity of salts that form the separating layer and prevent or significantly decrease the dissolution of the active additive in the total bath volume was also determined empirically and is in the same range of 0.1-5% of the pyrolysis bath melt mass. With an additive of less than 0.1%, no continuous cover layer is created, and of over 5%, the cost of the refining process is increased. The implementation of the claimed method according to example No. 1 shows the reduction of sulphur content in the solid residue by 60% and sulphur and chlorine in the pyrolysis gas condensate by 70%.

The active additive is aimed at binding the sulphur and chlorine generated in the pyrolysis process into stable chemical compounds that are partially discharged to the slag and subsequently removed from the apparatus.

The first stage of the pyrolysis product refining process which takes place inside the liquid metal bath at a minimum concentration of active additives is aimed at the refining of mainly solid carbon-containing residue that remains inside the bath for a long time sufficient to achieve an acceptable refining level even at the minimum concentration of active additives. It has been empirically established that the optimal concentration of active additives in the liquid-metal heat-transfer agent is within the range of 0.1-5.0%. Below 0.1%, there is no refining effect, and above 5%, the refining costs start to exceed the economic effect of refining.

The second stage of the process aimed at refining the pyrolysis off-gases cannot be satisfactorily implemented inside the liquid metal bath for the following reasons:
- The explosive nature of pyrolysis gas release causes minimum contact time with the melt containing a minimum amount of refining agents.
- The explosive nature of pyrolysis gas release causes a minimum contact area with the melt containing a minimum amount of refining agents. The contact is only possible along the external surface of bubbles or jets of emitting gases.
- Creation of high concentration of refining additives in the entire volume of liquid metal bath is not reasonable for technical and economic reasons.

For the full-fledged implementation of the second stage, two additional non-miscible layers made of covering-separating melt of salts of alkali and/or alkaline earth metals are created on the surface of the liquid metal bath. On the top of it, there is an active layer consisting of a melt of alkali and/or alkaline earth metals.

The following conditions are mandatory:
- The melting temperature of the liquid metal bath melt shall be higher than the melting temperature of the covering-separating melt of salts which, in turn, shall be higher than the melting temperature of the melt constituting the active layer. This condition ensures that all layers of the bath are constantly in a liquid state.
- The density of the melt of the liquid metal bath shall be higher than that of the covering-separating melt of salts which, in turn, shall be higher than the density of the melt constituting the active layer. This condition ensures minimization of transition of active additives in the volume of the liquid metal bath, where their activity will be exhibited significantly lower.

The compliance with the above-mentioned conditions will enable to create a layer of the active additive with the highest concentration of refining components approaching 100% above the main melt of the heat-transfer agent that contains relatively small concentration of the active additive not mixed therewith due to an intermediate separating layer of liquid salts. This cannot be realized by introducing active additives directly to the heat-transfer agent melt as it was proposed in the prior art.

The claimed result is achieved by the fact that in a method of recycling wastes of polymeric, composite, and industrial-rubber materials by pyrolysis in a liquid-metal heat-transfer agent and apparatus for its implementation, according to the invention, the following is proposed:
- to use a liquid-metal heat-transfer agent based on one or more metals from the group of lead, bismuth, zinc, aluminum, and copper, which allow to make up a heat-transfer agent with melting temperature within the range from 232°C to 580°C (aluminum-copper alloy 50:50), which covers the whole temperature range of pyrolysis of the most common types of polymer substance waste. To introduce additionally one or more metals from the group of lithium, sodium, potassium, magnesium, and calcium, which are capable to actively bind sulphur and chlorine and output their compounds into slag, thus achieving refinement of mainly solid carbon-containing residue.
- to create a relatively thin covering-separating layer of molten salts of alkali and alkaline earth metals on the surface of the bath of liquid-metal heat-transfer agent, above which a thin layer consisting of a melt of alkali and/or alkaline earth metals is also created. Now of immersion of the next portion of pyrolyzed material into the liquid metal bath, there is an active release of pyrolysis gases, which intensively bubble the melt. This generates a cloud of finely dispersed drops of melt of alkali and/or alkaline earth metals over the bath surface, which get a maximum possible concentration and reaction surface area, which causes deep gas purification from sulphur and chlorine. The bath melt drops with the biggest density are carried away in a lower amount. When they fall back down, they pass through the molten salt layer and join the main bath mass. The droplets of the melt of active components having a minimum density are retained by the covering-separating molten salt layer and remain on the surface. Thus, a double synergistic effect is achieved: the energy of the released pyrolysis gases is used for dispersion of the active components, which requires no additional bubbling devices, and the presence of the covering-separating layer of molten salts largely prevents the blending and dissolution of active additives in the total mass of the liquid metal bath. It allows maintaining their concentration and contacting area with pyrolysis gases at a maximum possible level.

The proposed list of non-ferrous metals or their alloys in different combinations of components allows to select the optimal melting temperature of the liquid-metal heat-transfer agent depending on the type of waste to be processed, since there is an optimal pyrolysis temperature for each type of polymer waste. The bath temperature also makes it possible to adjust the ratio of gaseous to solid pyrolysis products depending on the planned recycling result. The use of an easily-melting heat-transfer agent, e.g., eutectic alloy of lead and tin or lead and bismuth, is quite sufficient for pyrolysis of rubber waste at temperatures of 300-400°C and for obtaining predominantly liquid products. In case of aiming at predominantly combustible gas production, the pyrolysis temperature shall exceed 550-600°C, which will require an excessive bath heating over the melting point, which, in turn, will lead to an increase of metallization (impregnation) of refractory lining or to an increased erosion of melting pots of devices or reactors for liquid metal pyrolysis. Experience has shown that the optimal superheat temperature of the heat-transfer agent over the liquidus line (melting point) is the range of 50-150 degrees. The low overheated (for less than 50 degrees) heat-transfer agent has no sufficient thermal reserve. In the first seconds of the process, it solidifies on the surface of pyrolyzed objects, forming a solid crust, which leads to an explosive release of pyrolysis gases that break the solidified layer of the heat-transfer agent. High overheating, above 150 degrees, will increase wear on the walls of the bath containing the heat-transfer agent.

### Specific method implementation example No. 1.

The claimed method of pyrolysis of easily-melting polymer waste, such as polypropylene and/or polyamide, and waste rubber products is carried out by means of a special apparatus, whose scheme is shown in Fig. 1, as follows: in the melt of the proposed liquid-metal heat-transfer agent composed of at least one base metal, e.g. lead or bismuth, or alloys based thereon with the operating bath temperature at a level of 350-400°C and density of at least 9 g/cm³, as with the lightest pure bismuth. At least one active additive is introduced, for example, in the form of sodium metal with the melting temperature of 98°C and density of 0.96 g/cm³. For the separation, a molten salt layer of the system of sodium chloride of 48%, lead chloride of 35% and zinc chloride of 17% is used, having the melting temperature of 320°C and density of 2.5 g/cm³, that is between similar characteristics for the bath and refining additive. Through inlet shutter 6 into chamber 1 isolated from the atmosphere by partitions 7 and 8 lowered below the melt level, a weighed sample composed of waste that was previously placed in a container with perforated walls 4 with at least one horizontal partition 5 is pushed along rail guides 2 by with the help of pushing mechanism 3. Pyrolysis takes place in chamber 1, which stops during 10-20 minutes as the containers move towards the outlet, which is evidenced by the cessation of release of pyrolysis gases discharged into the catching device through branch pipe 9. After that, while moving along rail guides 2, containers 4 leave the melt and cool down to the temperature lower than 300°C, at which spontaneous pyrolysis residue ignition in the air is impossible. Following that, the next used container is pushed through outlet shutter 12 to gravity slide 10 and solid carbon-containing pyrolysis residue is unloaded into hopper 11. The emptied containers are reloaded with waste and fed into inlet shutter 6. Thus, the apparatus has a continuous cycle of operation. At the inlet of chamber 1, guides 2, along which the container is moving along the apparatus, have lowest point HT of trajectory. After that they take up a positive slope to the horizon by angle α, which excludes a reverse ejection of the container in case of violent pyrolysis gas release if pushing mechanism 3 fails. The value of the angle was empirically determined and is 3-10 degrees. The angle of less than 3° does not ensure protection against the reverse ejection of the container, and a slope greater than 10, on the contrary, causes a premature ejection in the forward direction, while the container must remain inside the bath for a strictly defined time. Containers 4 have perforated walls for melt penetration and pyrolysis gas release, and at least one horizontal partition 5 required to disperse the plastic waste weighed sample over the container area and increase the contact surface of the weighed sample with the heat-transfer agent. Otherwise, the Archimedes buoyant force acting on the weighed sample from the side of the melt presses it into a compact monolithic lump and presses it against the upper wall of the container, which drastically reduces the contact area of the weighed sample with the heat-transfer agent, reduces the weighed sample heating rate and increases the pyrolysis reaction time.

If in the implementation of the method, lead having the melting temperature of 327°C is used, for example, as a heat-transfer agent or lead-based alloys with similar melting temperature, it is not recommended to use calcium as a refining additive, because formed intermetallic compound Pb₃Ca has the melting temperature of 620°C, which may result in transition of active additives from the melt to solid state, which will significantly reduce their reactivity. In this particular case, sodium being the cheapest material should be chosen. In addition, all intermetallic compounds of the sodium-lead system have the melting temperature not exceeding 380°C. In quantitative terms, the fraction of refining additive will be within the range of 0.1-5% of the pyrolysis bath melt mass. This range was experimentally established. Experiments also demonstrated that an additive of less than 0.1% had no refining effect, and the increase in the additive concentration above 5% resulted in the additive cost exceeding the economic effect from the pyrolysis product refinement. The optimal quantity of salts that form the separating layer and prevent or significantly decrease the dissolution of the active additive in the total bath volume was also determined empirically and is in the same range of 0.1-5% of the pyrolysis bath melt mass. With an additive of less than 0.1%, no continuous cover layer is created, and of over 5%, the cost of the refining process is increased. The implementation of the claimed method according to example No. 1 shows the reduction of sulphur content in the solid residue by 60% and sulphur and chlorine in the pyrolysis gas condensate by 70%.

### Specific method implementation example No. 2.

If the heat-transfer agent described in Example No. 1 is a zinc-based melt with the working temperature within 450-500°C, which is used for pyrolysis of polymer waste with higher decomposition temperature, e.g. polyethylene and/or polyvinylchloride, latex waste, some grades of rubber, it is most appropriate to use calcium as a refining agent, since in contrast to the previous example, the main intermetallic compounds Ca₃Zn and CasZns have a lower melting temperature than zinc itself and a density of 1.55 g/cm³. Considering the above-mentioned temperature range, it is necessary to use, for example, a triple eutectic system of salts widely used in engineering as a separating salt melt: 35% of sodium chloride, 21% of calcium chloride and 44% of magnesium chloride, which has a melting temperature of 430°C and density of 2.15 g/cm³. This satisfies the qualifying requirements to have these parameters at a level between the same parameters of the molten bath and the refining additive. All other parameters and the process are identical to those specified in Example No. 1.

The implementation of the claimed method according to example No. 2 shows the reduction of sulphur content in the solid residue by 70% and sulphur and chlorine in the pyrolysis gas condensate by 70%.

Specific method implementation example No. 3.

If the heat-transfer agent described in Example No. 1 is molten copper and aluminum, e.g. eutectic alloy of 67% of copper and 33% of aluminum with high density and thermal capacity with the working temperature within the range of 570-700°C that is used in pyrolysis of polymer wastes with even higher decomposition temperature, e.g. polystyrene and/or polyethylene terephthalate and/or plastic waste considerably polluted with wood, any of the proposed metals or their alloys - lithium, sodium, potassium, magnesium, calcium - can be selected as a refining agent. However, for economic reasons, the cheapest alloy consisting of 90% of magnesium and 10% of calcium with the melting temperature of 520°C should be selected, and a cost-effective set of salts as 40-60% of sodium chloride and 60-40% of calcium chloride with the melting temperature not exceeding 550°C should be selected as a separating layer.

All other parameters and the process are identical to those specified in Example No. 1. The implementation of the claimed method according to example No. 3 shows the reduction of sulphur content in the solid residue by 50% and in the pyrolysis gas condensate by 50%.

Conveyor belt cuttings in quantity of 20% and chippings of used automobile tyres in fraction less than 20 mm in amount of 80% of sample weight were used as waste.

A metallic melt was used as a pyrolysis medium, which consisted in the first case of pure lead, and in the second case of lead with addition of 0.3% of sodium by mass. Adding more than 0.3% of sodium is inappropriate, because with further increase in sodium consumption, there is no further reduction in the sulphur content of the solid carbon-containing residue. Furthermore, the addition of more than 0.3% of sodium leads to melt delamination, because at a concentration of 0.3 percent by weight and less, all sodium is bound into stable intermetallic compound Pb₃Na, which forms solutions with lead in a wide variety of concentrations with no deterioration in homogeneity of the molten heat-transfer agent.

In both cases, after pyrolysis in a laboratory reactor, the solid carbon-containing residue was discharged and analyzed for sulphur content, which showed a reduction in the content of this impurity from 5.8% to 0.25%. The sulphur content of 0.25% corresponds to this parameter for the best coal grades and allows to use the solid carbon-containing residue as a commercial product without additional refining.

## Claims

1. Method of recycling wastes of polymeric, polymer compound and industrial-rubber materials, under which
a bath of liquid-metal heat-transfer agent is formed by melting, which consists of one or more metals from the group of lead, bismuth, zinc, aluminium, and copper, and the heat-transfer agent is overheated by 50-150°C above the melting temperature,
a separating layer is created on the surface of the heat-transfer agent melt by melting a complex of salts of alkali and alkaline earth metals on the melt surface,
a refining layer is created above the separating layer by melting active additives consisting of alkali and/or alkaline earth metals,
and the following conditions are observed: The melting temperature of the molten liquid-metal heat-transfer agent is higher than the melting temperature of molten salts of the separating layer, which, in turn, is higher than the melting temperature of the refining layer melt, and the density of the molten liquid-metal heat-transfer agent is higher than the density of the molten salts of the separating layer, which, in turn, is higher than the density of the refining layer melt,
a weighed sample composed of waste that was previously placed in a container with perforated walls with at least one horizontal partition is fed and pushed through the liquid-metal heat-transfer agent bath
at the end of pyrolysis, the containers are taken out of the melt,
concentration of active additives is kept constant by introducing portions of the active additive together with other portions of pyrolyzed waste.

2. The method of claim 1 **characterized in that** a separating layer is created by melting of salt complex in the quantitative ratio of 0.1 to 5% of the mass of the liquid-metal heat-transfer agent on the surface of the molten heat-transfer agent.

3. The method of claim 1 **characterized in that** a refining layer is created by melting of active additives in the quantitative ratio of 0.1 to 5% of the mass of the liquid-metal heat-transfer agent.

4. The method of claim 1 **characterized in that** one or more metals from the group of lithium, sodium, potassium, magnesium, or calcium are introduced into the melt of the liquid-metal heat-transfer agent as active additives.

5. The method of claim 1 **characterized in that** production and consumption waste of polymer, composite and industrial-rubber materials is used as waste.

6. The device for treating waste of polymer, composite and industrial-rubber materials including internal space formed by a bottom plate, side walls and arch,
inlet and outlet shutters made in the side walls of the device,
with the internal space having a reaction chamber isolated by vertical partitions, which are constructed from the arch and lowered below the level of the heat-transfer agent melt, and equipped with a branch pipe for pyrolysis gas output to the capture and condensation system.
the device is fitted with rail guides adapted to move at least one container along these rails, positioned from the inlet shutter to the outlet shutter and running below the level of the heat-transfer agent melt,
at least one container has perforated walls and at least one horizontal partition, with the guides from the inlet shutter to the reaction chamber being made top-down at an angle to the horizontal with the lowest point of the container movement pattern at the inlet of the reaction chamber. The guides from the reaction chamber to the outlet shutter are designed in an upward direction.

7. The device of claim 6 **characterized in that** it additionally contains a mechanism for pushing the containers along the rail guides.

8. The device of claim 6 **characterized in that** the outlet shutter is equipped with a gravity slide and a hopper for unloading solid carbon-containing pyrolysis residue.

9. The device of claim 6 **characterized in that** the installation angle for the guides is 3-10 degrees.
